# EUROPÄISCHE PATENTSCHRIFT

(11) **EP 2 345 114 B1**
(45) Veröffentlichungstag und Bekanntmachung des Hinweises auf die Patenterteilung: **12.03.2014**
(21) Anmeldenummer: 09736407.9
(22) Anmeldetag: 12.10.2009
(51) Int. Cl.: H01R 13/637

(54) **STECKVERBINDUNG**
PLUG CONNECTION
CONNEXION

(30) Priorität: 05.11.2008 DE 102008055904
(43) Veröffentlichungstag der Anmeldung: 20.07.2011
(73) Patentinhaber: Auto-Kabel Management GmbH, 79688 Hausen i.W. (DE)
(72) Erfinder: MÄCKEL, Rainer, 53639 Königswinter (DE); SCHULZ, Thomas, 72669 Unterensingen (DE)
(74) Vertreter: Cohausz & Florack
(86) Internationale Anmeldenummer: PCT/EP2009/063231
(87) Internationale Veröffentlichungsnummer: WO 2010/052094

(56) Entgegenhaltungen:
- EP-A- 0 665 566
- EP-A- 0 725 412

## Beschreibung

Die Erfindung betrifft eine Steckverbindung zum Schließen wenigstens eines Stromkreises mit einem Buchsenelement mit einer Anzahl von Kontaktöffnungen und einem zu dem Buchsenelement korrespondierenden Steckerelement mit einer Anzahl von zu den Kontaktöffnungen korrespondierenden Kontaktstiften.

Aus dem Stand der Technik sind Steckverbindungen bekannt, die bei einem Insassenschutzmittel in Fahrzeugen, insbesondere in Hybridfahrzeugen, eine Steuereinheit des Insassenschutzmittels und ein Zündelement des Insassenschutzmittels elektrisch verbinden. Die Steckverbindung ist separat zu einem pyrotechnischen Trennelement und dem Zündelement des Insassenschutzmittels in einer Ebene nebeneinander angeordnet. EP 07 25 412 offenbart eine steckverbindung entsprechend dem Oberbegriff von Anspruch 1.

Üblicherweise enthält das Zündelement eine pyrotechnische Ladung, beispielsweise ein Treibladungspulver, welches sich bei einer Zündanforderung, gesteuert von der Steuereinheit, entzündet. Die Zündanforderung wird dabei vom Steuergerät als Stromimpuls über eine elektrische Leitung an das Zündelement erzeugt. Ist der Wert des Stromimpulses oberhalb eines vorgegebenen Schwellwertes, entzündet sich die pyrotechnische Ladung. Zur Trennung der elektrischen Leitung ist an der Wirkungsseite des pyrotechnischen Trennelementes ein Werkzeug, beispielsweise ein Meißel, ein Messer oder ein Stanzelement angeordnet. Bei Entzündung der pyrotechnischen Ladung entsteht ein Antriebsdruck, welcher eine mechanische Bewegung des Werkzeuges des pyrotechnischen Trennelementes zur Folge hat. Dabei wird eine elektrische Verbindung unterbrochen, indem eine elektrische Leitung mechanisch getrennt wird.

Die separate Anordnung des pyrotechnischen Trennelementes und Zündelementes zur Steckverbindung in einer Ebene fordert einen großen Bauraum. Ebenso führt ein großer Bauraum auch zu höheren Kosten.

Der Erfindung liegt die Aufgabe zugrunde, eine Steckverbindung insbesondere für ein Insassenschutzmittel anzugeben, bei welchem eine einfache Trennung von Stromkreisen bauraumoptimiert und kostengünstig möglich ist.

Die Aufgabe wird erfindungsgemäß durch die im Anspruch 1 angegebenen Merkmale gelöst.

Vorteilhafte Weiterbildungen der Erfindung sind Gegenstand der Unteransprüche.

Die Steckverbindung zum Schließen eines Stromkreises umfasst ein Buchsenelement mit einer Anzahl von Kontaktöffnungen und einem zu dem Buchsenelement korrespondierenden Steckerelement mit einer Anzahl von zu den Kontaktöffnungen korrespondierenden Kontaktstiften. Das Buchsenelement als weiblicher Teil der Steckverbindung weist zwei oder mehr nach innen gerichtete Kontaktöffnungen auf. Das Steckerelement als männlicher Teil der Steckverbindung weist zwei oder mehr nach außen gerichtete Kontaktstifte auf.

Erfindungsgemäß ist im Buchsenelement der Steckverbindung oder im Steckerelement der Steckverbindung ein pyrotechnisches Trennelement integriert, mittels dessen der Stromkreis trennbar ist. Durch das in das Buchsenelement oder in das Steckerelement integrierte, pyrotechnische Trennelement ist der Bauraum optimiert. Darüber hinaus ergeben sich ein geringerer Montageaufwand und somit eine Einsparung der Kosten zur Herstellung eines Insassenschutzmittels. Besonders vorteilhaft ist, dass aufgrund der kompakten Bauweise der erfindungsgemäßen Steckverbindung das pyrotechnische Trennelement gering dosiert ausgeführt werden kann. Damit sind nicht nur geringe Dimensionen der Steckverbindung, sondern auch geringe Dimensionen von umliegenden Gehäusen möglich. Das jeweilige Element - Stecker- oder Buchsenelement-, in welches das pyrotechnische Trennelement integriert ist, weist bevorzugt ein Gehäuse auf. Mindestens eines der Elemente kann gehäuselos ausgebildet sein. Beispielsweise kann auf Steckkontakte wie Eingangskontakte verzichtet werden, wenn der Eingang direkt z. B. auf eine Platine gelötet oder gesteckt, geschraubt wird.

Vorzugsweise ist mindestens eine der Kontaktöffnungen als eine Eingangskontaktöffnung und mindestens eine der Kontaktöffnungen als eine Ausgangskontaktöffnung ausgebildet. Dabei ist dazu mindestens einer der Kontaktstifte als ein Eingangskontaktstift, welcher mit der zugehörigen Eingangskontaktöffnung korrespondiert, und mindestens einer der Kontaktstifte als ein Ausgangskontaktstift ausgebildet, welcher mit der zugehörigen Ausgangskontaktöffnung korrespondiert.

Das Buchsenelement oder das Steckerelement sind über elektrische Leitungen mit mindestens einem Steuergerät verbunden. Dazu sind die Ausgangskontaktstifte des Steckerelementes über die elektrische Leitungen mit mindestens einem Steuergerät verbunden. Beispielsweise ist ein Ausgangskontaktstift mit einem Steuergerät über jeweils eine elektrische Leitung verbunden. Zur elektrischen Versorgung der Steuergeräte ist der Eingangskontaktstift mit einer Batterie verbunden.

Sind die Kontaktstifte in die korrespondierenden Eingangskontaktöffnungen eingesteckt, ist die Steckverbindung in einem geschlossen Zustand und das Buchsenelement ist mechanisch und elektrisch mit dem Steckerelement verbunden. Dadurch wird wenigstens ein Stromkreis geschlossen. Die Anzahl der geschlossenen Stromkreise korrespondiert mit der Anzahl der an jeweils ein Steuergerät angeschlossenen Ausgangskontaktstifte. Somit können die mit den Ausgangskontaktstiften verbundenen Steuergeräte durch die mit dem Eingangskontaktstift verbundenen Batterie versorgt werden. Alternativ sind entsprechend die Ausgangskontaktöffnungen des Buchsenelementes über elektrische Leitungen mit mindestens einem Steuergerät verbunden.

Zur Übertragung der Zündanforderung in Form eines Stromimpulses ist das pyrotechnische Trennelement separat mit einem Steuergerät, insbesondere einem Airbag-Steuergerät, über eine elektrische Leitung verbunden. Diese elektrische Leitung ist außerhalb der Steckverbindung angeordnet. Zweckmäßigerweise ist zur Optimierung des Bauraumes und zur sicheren Trennung oder Deformation der Verbindungsschiene das pyrotechnische Trennelement mit Wirkrichtung auf die Verbindungsschiene angeordnet. Das pyrotechnische Trennelement ist zwischen zwei Kontaktöffnungen oder parallel neben einer der äußeren Kontaktöffnungen angeordnet. Besonders bevorzugt ist dabei das pyrotechnische Trennelement zwischen einer Eingangskontaktöffnung und einer Ausgangskontaktöffnung oder parallel zu einer Eingangskontaktöffnung im Buchsenelement angeordnet.

Alternativ ist das pyrotechnische Trennelement zwischen zwei Kontaktstiften oder parallel neben einen der äußeren Kontaktstifte angeordnet. Besonders bevorzugt ist dabei das pyrotechnische Trennelement parallel zu einem Eingangskontaktstift und einem Ausgangskontaktstift oder parallel zu einem Eingangskontaktstift im Steckerelement mit Wirkrichtung auf die Verbindungsschiene angeordnet.

Vorzugsweise sind die Abmessung und/oder die Position der Verbindungsschiene, insbesondere deren Länge und Form, einerseits und die Abmessung und/oder die Position des pyrotechnischen Trennelementes andererseits aufeinander abgestimmt. Ist das pyrotechnische Trennelement beispielsweise zwischen einer ersten Eingangskontaktöffnung und einer Gruppe von Ausgangskontaktöffnungen im Buchsenelement angeordnet, weist die Verbindungsschiene eine Länge auf, die mit der Länge der parallel angeordneten Gruppe von Ausgangskontaktöffnungen und der Eingangskontaktöffnung korrespondiert. Ist das pyrotechnische Trennelement im Randbereich des Buchsenelementes neben einer der äußeren Kontaktöffnungen angeordnet, korrespondiert die Länge der Verbindungsschiene ebenfalls mit den Ausgangskontaktöffnungen, der Eingangskontaktöffnung und dem pyrotechnischen Trennelement. Mit anderen Worten: Die Verbindungsschiene ragt in der Länge über die Länge aller Kontaktöffnungen hinaus.

Um ein erneutes Kontaktieren der durch das pyrotechnische Trennelement getrennten Kontaktelemente zu verhindern, ist gemäß einer bevorzugten Ausführungsform der Erfindung eine Rastvorrichtung angeordnet. Besonders bevorzugt ist dabei die Rastvorrichtung an den Kontaktöffnungen des Buchsenelementes und/oder an den Kontaktstiften des Steckerelementes angeordnet. Beispielsweise umfasst die Rastvorrichtung Rastmittel in Form von biegeelastischen Rastnasen, welche seitlich am Kontaktstift angeordnet sind und in an der Kontaktöffnung zu den Rastnasen korrespondierenden angeordneten Rastausnehmungen eingreifen. Durch Ausbildung der biegeelastischen Rastnasen wird die einrastende Verbindung der Kontaktelemente durch eine äußere Krafteinwirkung, beispielsweise durch einfaches Biegen der Rastnasen, hergestellt. Somit wird ein unbeabsichtigtes, erneutes Kontaktieren der Kontaktelemente durch beispielsweise ein Zurückfedern der deformierten Verbindungsschiene verhindert.

In einer weiteren möglichen Ausführungsform der Erfindung ist zwischen der Verbindungsschiene und der der Kontaktseite gegenüberliegende Seite des pyrotechnischen Trennelementes ein topfförmig ausgebildetes Element, z. B. ein Kunststofftopf, angeordnet. Damit kann die Kraft, die beim Auslösen des pyrotechnischen Trennelementes durch den Antriebsdruck entsteht, auf die Verbindungsschiene besser übertragen werden.

Zur Auslösung einer pyrotechnischen Reaktion enthält das pyrotechnische Trennelement eine pyrotechnische Ladung, beispielsweise ein Treibladungspulver, welches bei einer Zündanforderung aktiviert wird.

Beim Auslösen des pyrotechnischen Trennelementes ist gemäß einer ersten Alternative einer Ausgestaltung der Erfindung die Verbindungsschiene durch einen aus der pyrotechnischen Reaktion resultierenden Antriebsdruck trennbar, das heißt insbesondere mechanisch und damit auch elektrisch unterbrechbar.

Gemäß einer zweiten Alternative der Ausgestaltung der Erfindung ist die Verbindungsschiene durch einen aus der pyrotechnischen Reaktion resultierenden Antriebsdruck deformierbar. Besonders bevorzugt ist die Verbindungsschiene in zum Steckerelement entgegengesetzter Richtung abwinkelbar. Dabei ist zumindest eine Kontaktöffnung, die mit der Verbindungsschiene in Wirkeinheit steht, vom korrespondierenden Kontaktstift mechanisch und damit auch elektrisch trennbar.

Gemäß einer dritten Alternative der Ausgestaltung der Erfindung ist die Verbindungsschiene mit einer Sollbruchstelle versehen. Dabei ist beim Auslösen des pyrotechnischen Trennelementes die Verbindungsschiene an der Sollbruchstelle durch einen aus der pyrotechnischen Reaktion resultierenden Antriebsdrucktrennbar.

Gemäß einer vierten Alternative der Ausgestaltung der Erfindung ist die Verbindungsschiene beim Auslösen des pyrotechnischen Trennelementes durch die aus der pyrotechnischen Reaktion resultierenden hohen Temperaturen irreversibel trennbar.

Gemäß einer fünften Alternative der Ausgestaltung der Erfindung weist die Verbindungsschiene ein Verbindungselement auf, welches zweckmäßigerweise an der der Kontaktseite gegenüberliegende Seite des pyrotechnischen Trennelementes angeordnet ist. Damit befindet sich das Verbindungselement in unmittelbarerer Nähe der Wirkungsseite des Trennelementes, an welcher die pyrotechnische Reaktion stattfindet.

Zur einfachen Trennung der Verbindungsschiene, welche ein Verbindungselement aufweist, weist das Verbindungselement eine kraftschlüssige oder formschlüssige Verbindung auf. Das Verbindungselement und somit die Verbindungsschiene sind durch einen aus der pyrotechnischen Reaktion resultierenden Antriebsdruck trennbar.

Die mit der Erfindung erzielten Vorteile bestehen insbesondere darin, dass der Bauraum optimiert ist, da das pyrotechnische Trennelement in mindestens eine der Komponenten der Steckverbindung, nämlich dem Buchsenelement oder dem Steckerelement, integriert ist. Besonders vorteilhaft ist, dass das pyrotechnische Trennelement eine pyrotechnische Ladung enthält und somit auch für die Erzeugung der pyrotechnischen Reaktion verantwortlich ist. Mit anderen Worten: Das pyrotechnische Trennelement der erfindungsgemäßen Steckverbindung vereint zwei Funktionen, nämlich Zündfunktion und Trennungsfunktion, in dem es die pyrotechnische Reaktion erzeugt und anschließend wenigstens einen Stromkreis trennt. Damit wird die Anzahl an Bauelementen gegenüber den herkömmlichen Steckverbindungen reduziert und es folgt eine Einsparung von Kosten.

Ausführungsbeispiele der Erfindung werden anhand von Zeichnungen näher erläutert.

Dabei zeigen:
- Fig. 1A: eine schematische Schnittdarstellung einer ersten Ausführungsform einer erfindungsgemäßen Steckverbindung vor einer Zündung,
- Fig. 1B: eine zugehörige schematische Schnittdarstellung der ersten Ausführungsform der erfindungsgemäßen Steckverbindung nach der Zündung,
- Fig. 2A: eine schematische Schnittdarstellung einer zweiten Ausführungsform einer erfindungsgemäßen Steckverbindung vor einer Zündung,
- Fig. 2B: eine zugehörige schematische Schnittdarstellung der zweiten Ausführungsform der erfindungsgemäßen Steckverbindung nach der Zündung,
- Fig 3A: eine schematische Schnittdarstellung einer dritten Ausführungsform einer erfindungsgemäßen Steckverbindung vor einer Zündung,
- Fig 3B: eine zugehörige schematische Schnittdarstellung der dritten Ausführungsform der erfindungsgemäßen Steckverbindung nach der Zündung,
- Fig 4A: eine schematische Schnittdarstellung einer vierten Ausführungsform einer erfindungsgemäßen Steckverbindung vor einer Zündung,
- Fig 4B: eine zugehörige schematische Schnittdarstellung der vierten Ausführungsform der erfindungsgemäßen Steckverbindung nach der Zündung,
- Fig 5A: eine schematische Schnittdarstellung einer fünften Ausführungsform einer erfindungsgemäßen Steckverbindung vor einer Zündung und
- Fig 5B: eine zugehörige schematische Schnittdarstellung der fünften Ausführungsform der erfindungsgemäßen Steckverbindung nach der Zündung.

Einander entsprechende Teile sind in allen Figuren mit den gleichen Bezugszeichen versehen.

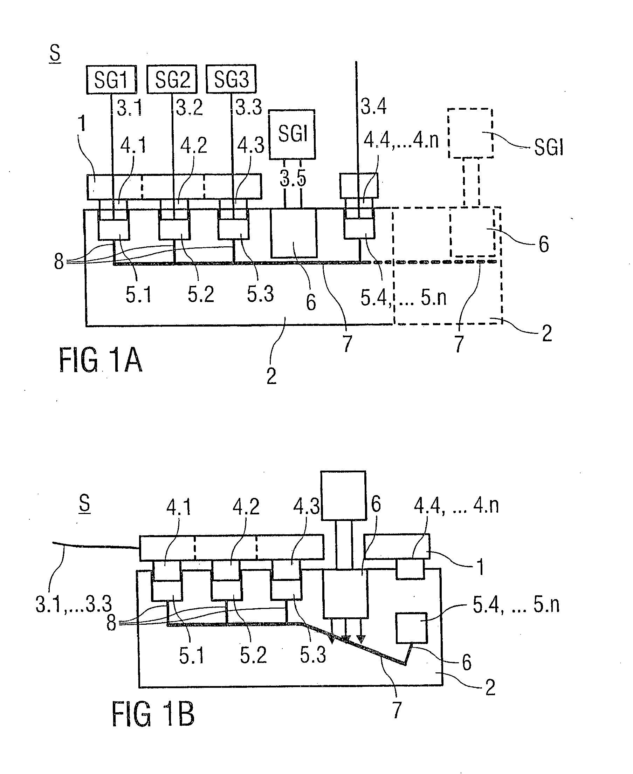

Figuren 1A, 1B zeigen Längsschnitte einer ersten Ausführungsform einer erfindungsgemäßen Steckverbindung S, bei der ein Steckerelement 1 in ein Buchsenelement 2 eingesteckt ist. Am Steckerelement 1 sind elektrische Leitungen 3.1 bis 3.5 angeordnet; das Steckerelement 1 weist vier Kontaktstiften 4.1 bis 4.4 und ein Gehäuse auf. Das Buchsenelement 2 weist vier Kontaktöffnungen 5.1 bis 5.4 und ein Gehäuse auf.

Dabei zeigt Figur 1A die erfindungsgemäße Steckverbindung S vor Zündung eines pyrotechnischen Trennelementes 6, wie beispielsweise ein Airbagzünder.

Die Steckverbindung S umfasst das Buchsenelement 2 mit vier nach innen weisenden Kontaktöffnungen 5.1 bis 5.4 und ein zu dem Buchsenelement 2 korrespondierenden Steckerelement 1 mit vier nach außen führenden zu den Kontaktöffnungen 5.1 bis 5.4 korrespondierenden Kontaktstiften 4.1 bis 4.4. Die Kontaktöffnungen 5.1 bis 5.4 des Buchsenelementes 2 sind im Ausführungsbeispiel parallel zueinander angeordnet. Zur elektrischen und mechanischen Kontaktierung des Steckerelementes 1 mit dem Buchsenelement 2 werden die Kontaktstifte 4.1 bis 4.4 in die zu den Kontaktstiften 4.1 bis 4.4 korrespondierenden Kontaktöffnungen 5.1 bis 5.4 eingeführt. Im Ausführungsbeispiel sind die Kontaktstifte 4.1 bis 4.3 als Ausgangskontaktstifte und der Kontaktstift 4.4 als Eingangskontaktstift ausgebildet. Korrespondierend dazu sind die Kontaktöffnungen 5.1 bis 5.3 als Ausgangskontaktöffnungen und die Kontaktöffnung 5.4 als Eingangskontaktöffnung ausgebildet.

Optional kann das Steckerelement 1 gehäuselos ausgebildet sein. Weiterhin kann auf die Eingangskontaktöffnungen 5.4 bis 5.n und/oder auf die Eingangskontaktstifte 4.4 bis 4.n verzichtet werden, wenn der Eingang direkt z. B. auf eine Platine gelötet oder gesteckt oder geschraubt wird.

Die Ausgangskontaktöffnungen 5.1 bis 5.3 und die Eingangskontaktöffnung 5.4 sind über eine Verbindungsschiene 7 mittelbar mittels senkrecht abgehender Leitungskanäle 8 im Buchsenelement 2 untereinander verbunden. Die Verbindungsschiene 7 ist leitend und verbindet die Eingangskontaktöffnung 5.4 mit den Ausgangskontaktöffnungen 5.1 bis 5.3 mechanisch und elektrisch. Als Material für die Verbindungsschiene 7 dient ein elektrisch leitendes Material, wie beispielsweise Kupfer oder Aluminium.

Die Ausgangskontaktstifte 4.1 bis 4.3 des Steckerelementes 1 sind über elektrische Leitungen 3.1 bis 3.4 jeweils mit einem Steuergerät SG1 bis SG3 verbunden. Im Ausführungsbeispiel ist der Ausgangskontaktstift 4.1 mit einem ersten Steuergerät SG1 über die elektrische Leitung 3.1 verbunden. Entsprechend ist der Ausgangskontaktstift 4.2 mit einem zweiten Steuergerät SG2 über die elektrische Leitung 3.2 und der Ausgangskontaktstift 4.3 mit einem dritten Steuergerät SG3 über die elektrische Leitung 3.3 verbunden.

Zur elektrischen Versorgung der Steuergeräte SG1 bis SG3 ist der Eingangskontaktstift 4.4 in nicht näher dargestellter Art und Weise über die elektrische Leitung 3.4 mit einer Batterie verbunden.

Die Kontaktstifte 4.1 bis 4.4 sind in die korrespondierenden Eingangskontaktöffnungen 5.1 bis 5.4 im Ausführungsbeispiel eingesteckt, damit ist die Steckverbindung S in einem geschlossen Zustand und das Buchsenelement 2 ist mechanisch und elektrisch mit dem Steckerelement 1 verbunden. Somit können die nicht näher dargestellten, mit den Ausgangskontaktstiften 4.1 bis 4.3 verbundenen Steuergeräte SG1 bis SG3 über die mit dem Eingangskontaktstift 4.4 verbundenen Batterie versorgt werden.

Das pyrotechnische Trennelement 6 ist mit einem Steuergerät SGI, beispielsweise einem Airbag-Steuergerät, über die elektrische Leitung 3.5, welche außerhalb der Steckverbindung S und somit separat von dieser angeordnet ist, verbunden. Die elektrische Leitung 3.5 des pyrotechnischen Trennelementes 6 dient der Übertragung der Zündanforderung, welche vom Steuergerät SG1 in Form eines Stromimpulses erzeugt wird.

Zur sicheren Deformation der Verbindungsschiene 7 im Falle der Zündung des pyrotechnischen Trennelements 6 ist dieses parallel zwischen der Ausgangskontaktöffnung 5.3 und der Eingangskontaktöffnung 5.4 angeordnet. Es ist auch möglich, das pyrotechnische Trennelement 6 parallel zwischen den Ausgangskontaktstift 4.3 und dem Eingangskontaktstift 4.4 anzuordnen.

Alternativ kann das pyrotechnische Trennelement 6, wie im Ausführungsbeispiel in Figur 1A durch gestrichelte Linien angedeutet, parallel zu der äußeren Eingangskontaktöffnung 5.4, insbesondere zwischen der Eingangskontaktöffnung 5.4 und einem Randbereich des Buchsenelementes 2, angeordnet sein. Hierdurch ist die Verbindungsschiene 7 verlängert.

Es ist auch möglich, das pyrotechnische Trennelement 6 parallel zu einem Eingangskontaktstift 4.4, insbesondere zwischen zwei Eingangskontaktstiften 4.4 bis 4.n oder zwischen einem Eingangskontaktstift 4.4, und einem Randbereich des Steckerelementes 1 anzuordnen.

Weiterhin enthält das pyrotechnische Trennelement 6 in nicht näher dargestellter Art und Weise eine pyrotechnische Ladung zur Auslösung einer pyrotechnischen Reaktion, beispielsweise ein Treibladungspulver, welches bei einer Zündanforderung aktiviert wird und eine pyrotechnische Reaktion auslöst.

In Figur 1B wird die in Figur 1A gezeigte Steckverbindung S nach Zündung des pyrotechnischen Trennelementes 6 dargestellt.

Nach Aktivierung der pyrotechnischen Ladung im pyrotechnischen Trennelement 6 entsteht ein Antriebsdruck, welcher auf die Verbindungsschiene 7 wirkt und eine Abwinkelung dieser in die zum Steckerelement 1 entgegengesetzte Richtung zur Folge hat. Dabei ist im Ausführungsbeispiel die Eingangskontaktöffnung 5.4 vom zu der Eingangskontaktöffnung 5.4 korrespondierenden Eingangskontaktstift 4.4 derart räumlich getrennt, dass kein Strom zwischen der Eingangskontaktöffnung 5.4 und den Ausgangskontraktöffnungen 5.1 bis 5.3 fließen kann.

Um ein erneutes Kontaktieren der vom Eingangskontaktstift 4.4 getrennten Eingangskontaktöffnung 5.4 sicher zu vermeiden, ist in nicht näher dargestellter Art und Weise am Eingangskontaktstift 4.4 eine Rastvorrichtung angeordnet. Die Rastvorrichtung umfasst beispielsweise biegeelastische Rastnasen, welche am Eingangskontaktstift 4.4 angeordnet sind und zu den Rastnasen korrespondierende Rastausnehmungen, welche entsprechend zur Aufnahme der Rastnasen an der Eingangskontaktöffnung 5.4 angeordneten sind. Durch Ausbildung der biegeelastischen Rastnasen wird die einrastende Verbindung des Eingangskontaktstiftes 4.4 mit der korrespondierenden Eingangskontaktöffnung 5.4 durch eine äußere Krafteinwirkung, beispielsweise durch einfaches Biegen der Rastnasen, hergestellt. Somit wird ein unbeabsichtigtes, erneutes Kontaktieren der vom Eingangskontaktstift 4.4 getrennten Eingangskontaktöffnung 5.4, beispielsweise durch ein Zurückfedern der deformierten Verbindungsschiene 7, verhindert.

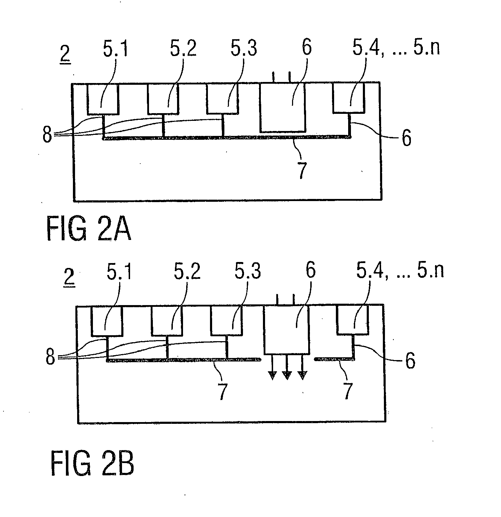

Die Figuren 2A, 2B zeigen Längsschnitte einer zweiten Ausführungsform einer erfindungsgemäßen Steckverbindung S in zwei Zuständen.

In Figur 2A wird ein Buchsenelement 2 der erfindungsgemäßen Steckverbindung S gemäß Figur 1A vor Zündung des pyrotechnischen Trennelementes 6 dargestellt; in Figur 2B ist die Verbindungsschiene 7 nach Zündung durch aus die der pyrotechnischen Reaktion resultierenden, hohen Temperaturen getrennt. Infolge der hohen Temperatur ist der Abschnitt der Verbindungsschiene 7, der dem pyrotechnischen Trennelement 6 gegenüberliegt, durchgebrannt. Dadurch kann kein Strom zwischen der Eingangskontaktöffnung 5.4 und den Ausgangskontaktöffnungen 5.1 bis 5.3 fließen.

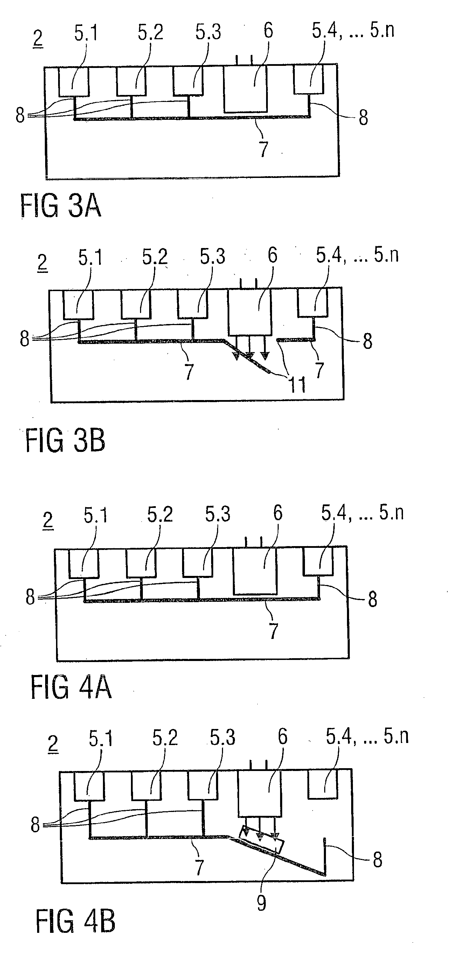

In den Figuren 3A, 3B zeigen Längsschnitte einer dritten Ausführungsform einer erfindungsgemäßen Steckverbindung S ebenfalls in zwei Zuständen. Die Verbindungsschiene 7 ist dabei mit einer Sollbruchstelle 11 versehen.

Figur 3A zeigt ein Buchsenelement 2 der erfindungsgemäßen Steckverbindung S vor Auslösung des pyrotechnischen Trennelementes 6 gemäß Figur 1A mit einer Sollbruchstelle 11, welche in nicht näher dargestellter Art und Weise an der Verbindungsschiene 7 angeordnet ist.

In Figur 3B ist die Verbindungsschiene 7 an der Sollbruchstelle 11 durch den aus der Aktivierung der pyrotechnischen Ladung resultierenden Antriebsdruck und/oder aus den resultierenden hohen Temperaturen getrennt. Die Sollbruchstelle 11 befindet sich zweckmäßigerweise an der der Kontaktseite des pyrotechnischen Trennelementes 6 gegenüberliegenden Seite. Die Sollbruchstelle 11 der Verbindungsschiene 7 ist in Form einer mechanischen Schwachstelle, nämlich einer Querschnittsverjüngung der Verbindungsschiene 7, ausgebildet. Nach Zündung der pyrotechnischen Ladung ist der geschwächt ausgebildete Abschnitt an seinem linken Ende deformiert und an seinem rechten Ende getrennt.

Die Figuren 4A, 4B zeigen schematisch Längsschnitte einer vierten Ausführungsform einer erfindungsgemäßen Steckverbindung S ebenfalls in zwei Zuständen. Figur 4A zeigt ein Buchsenelement 2 der erfindungsgemäßen Steckverbindung S vor Zündung des pyrotechnischen Trennelementes 6 gemäß Figur 1A; in Figur 4B ist das Buchsenelement 2 der erfindungsgemäßen Steckverbindung S nach der Zündung des pyrotechnischen Trennelementes 6 dargestellt.

Dabei ist zwischen der Verbindungsschiene 7 und der zur Kontaktseite gegenüberliegenden Seite des pyrotechnischen Trennelementes 6 ein topfförmig ausgebildetes Element 9, beispielsweise ein Kunststofftopf, angeordnet. Dadurch ist eine bessere Übertragung der Kraft, welche aus dem Antriebsdruck resultiert, auf die Verbindungsschiene 7 möglich. Die Verbindungsschiene 7 ist dabei analog Figur 1B abgewinkelt, hier ist jedoch der von der Eingangskontaktöffnung 5.4 abgehende Leitungskanal 6 aus der Eingangskontaktöffnung 5.4 derart herausgezogen, dass der Stromkreis sicher getrennt ist. Alternativ oder zusätzlich zu dieser Ausführungsform kann die Verbindungsschiene 7 eine Sollbruchstelle 11 gemäß der in Figur 3B beschriebenen Sollbruchstelle 11 aufweisen.

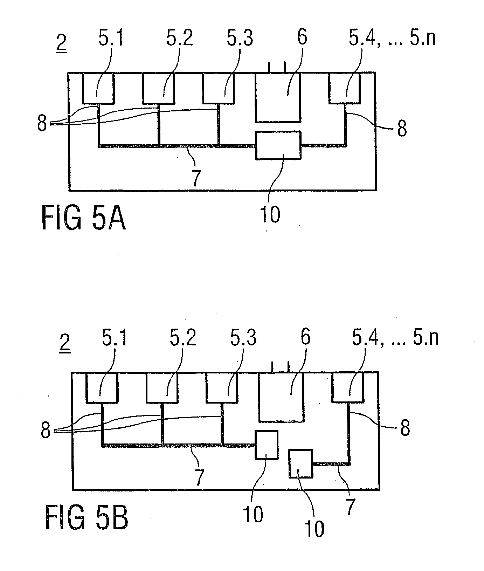

Figur 5A zeigt einen Längsschnitt einer fünften Ausführungsform einer erfindungsgemäßen Steckverbindung S gemäß Figur vor Zündung und Figur 5B die zugehörige Steckverbindung S nach der Zündung. In Figur 5A ist das Buchsenelement 2 gemäß Figur 1A dargestellt, wobei die Verbindungsschiene 7 zusätzlich ein lösbares kraft- oder formschlüssiges Verbindungselement 10 aufweist. Das Verbindungselement 10 ist zweckmäßigerweise zwischen der Verbindungsschiene 7 und der der Kontaktseite gegenüberliegenden Seite des pyrotechnischen Trennelementes 6 angeordnet.

In Figur 5B ist das Verbindungselement 10 durch den aus der pyrotechnischen Reaktion resultierenden Antriebsdruck aus seiner Form gelöst und räumlich derart getrennt, dass die Verbindungsschiene 7 getrennt ist und damit kein Strom zwischen der Eingangskontaktöffnung 5.4 und den Ausgangskontaktöffnungen 5.1 bis 5.3 fließen kann.

In einer alternativen, in den Figuren nicht gezeigten Ausführungsform der erfindungsgemäßen Steckverbindung S sind die Ausgangskontaktstifte 4.1 bis 4.3 und der Eingangskontaktstift 4.4 über eine Verbindungsschiene 7 mittelbar mittels Leitungskanäle 8 im Steckerelement 1 miteinander verbunden.

### Bezugszeichenliste

- 1: Steckerelement
- 2: Buchsenelement
- 3.1 bis 3.5: elektrische Leitungen
- 4.1 bis 4.3: Ausgangskontaktstifte
- 4.4 bis 4.n: Eingangskontaktstifte
- 5.1 bis 5.3: Ausgangskontaktöffnungen
- 5.4 bis 5.n: Eingangskontaktöffnungen
- 6: pyrotechnisches Trennelement
- 7: Verbindungsschiene
- 8: Leitungskanäle
- 9: topfförmig ausgebildetes Element
- 10: Verbindungselement
- 11: Sollbruchstelle

- S: Steckverbindung
- SG1: erstes Steuergerät
- SG2: zweites Steuergerät
- SG3: drittes Steuergerät
- SG1: Steuergerät Insassenschutzmittel

## Patentansprüche

1. Steckverbindung (S) zum Schließen eines Stromkreises mit einem Buchsenelement (2) mit einer Anzahl von Kontaktöffnungen (5.1 bis 5.n) und einem zu dem Buchsenelement (2) korrespondierenden Steckerelement (1) mit einer Anzahl von zu den Kontaktöffnungen (5.1 bis 5.n) korrespondierenden Kontaktstiften (4.1 bis 4.n), wobei in dem Buchsenelement (2) oder in dem Steckerelement (1) ein pyrotechnisches Trennelement (6) integriert ist, mittels dessen der Stromkreis trennbar ist, **dadurch gekennzeichnet**, das s die Kontaktöffnungen (5.1 bis 5.n) jeweils untereinander und/oder die Kontaktstifte (4.1 bis 4.n) jeweils untereinander über eine durch eine pyrotechnische Reaktion des pyrotechnischen Trennelementes (6) trennbare Verbindungsschiene (7) im Buchsenelement (2) beziehungsweise im Steckerelement (1) miteinander verbunden sind.

2. Steckverbindung (S) nach Anspruch 1, **dadurch gekennzeichnet, dass** mindestens eine der Kontaktöffnungen (5.1 bis 5.n) als eine Eingangskontaktöffnung (5.4 bis 5.n) und mindestens eine der Kontaktöffnungen (5.1 bis 5.n) als eine Ausgangskontaktöffnung (5.1 bis 5.3) ausgebildet ist und/oder mindestens einer der Kontaktstifte (4.1 bis 4.n) als ein mit der Eingangskontaktöffnung (5.4 bis 5.n) korrespondierender Eingangskontaktstift (4.4 bis 4.n) und mindestens einer der Kontaktstifte (4.1 bis 4.n) als ein mit der Ausgangskontaktöffnung (5.1 bis 5.3) korrespondierender Ausgangskontaktstift (4.1 bis 4.3) ausgebildet ist.

3. Steckverbindung (S) nach Anspruch 1 oder 2,
**dadurch gekennzeichnet, dass** das Buchsenelement (2) oder das Steckerelement (1) über elektrische Leitungen (3.1 bis 3.5) mit mindestens einem Steuergerät (SG1 bis SG3) verbunden ist.

4. Steckverbindung (S) nach einem der Ansprüche 1 bis 3,
**dadurch gekennzeichnet, dass** das pyrotechnische Trennelement (6) zwischen zwei Kontaktöffnungen (5.1 bis 5.n) oder parallel neben eine der äußeren Kontaktöffnungen (5.1 bis 5.n) angeordnet ist oder zwischen zwei Kontaktstiften (4.1 bis 4.n) oder parallel neben einen der äußeren Kontaktstifte (4.1 bis 4.n).

5. Steckverbindung (S) nach einem der Ansprüche 1 bis 4,
**dadurch gekennzeichnet, dass** die Abmessungen der Verbindungsschiene (7), insbesondere die Länge, Form und/oder die Position der Verbindungsschiene (7), an die Position des pyrotechnischen Trennelementes (6) angepasst ist.

6. Steckverbindung (S) nach einem der Ansprüche 1 bis 5,
**dadurch gekennzeichnet, dass** eine Rastvorrichtung, insbesondere an den Kontaktöffnungen (5.1 bis 5.n) des Buchsenelementes (2) und/oder an den Kontaktstiften (4.1 bis 4.n) des Steckerelementes (1) angeordnet ist.

7. Steckverbindung (S) nach einem der Ansprüche 1 bis 6,
**dadurch gekennzeichnet, dass** zwischen der Verbindungsschiene (7) und der zur Kontaktseite gegenüberliegenden Seite des pyrotechnischen Trennelementes (6) ein topfförmig ausgebildetes Element (9) angeordnet ist.

8. Steckverbindung (S) nach einem der Ansprüche 1 bis 7,
**dadurch gekennzeichnet, dass** das pyrotechnische Trennelement (6) eine pyrotechnische Ladung enthält.

9. Steckverbindung (S) nach einem der Ansprüche 1 bis 8,
**dadurch gekennzeichnet, dass** beim Auslösen des pyrotechnischen Trennelementes (6) die Verbindungsschiene (7) durch einen aus der pyrotechnischen Reaktion resultierenden Antriebsdruck trennbar oder deformierbar ist.

10. Steckverbindung (S) nach Anspruch 9,
**dadurch gekennzeichnet, dass** durch die druckbedingte Deformation der Verbindungsschiene (7), die Verbindungsschiene (7) in zur Kontaktseite entgegengesetzter Richtung abwinkelbar ist, wodurch zumindest eine der Kontaktöffnungen (5.1 bis 5.n) vom zugehörigen Kontaktstift (4.1 bis 4.n) trennbar ist.

11. Steckverbindung (S) nach Anspruch 9,
**dadurch gekennzeichnet, dass** die Verbindungsschiene (7) mit einer Sollbruchstelle (11) versehen ist und beim Auslösen des pyrotechnischen Trennelementes (6) die Verbindungsschiene (7) an der Sollbruchstelle (11) durch einen aus der pyrotechnischen Reaktion resultierenden Antriebsdruck trennbar ist.

12. Steckverbindung nach einem der Ansprüche 1 bis 8,
**dadurch gekennzeichnet, dass** beim Auslösen des pyrotechnischen Trennelementes (6) die Verbindungsschiene (7) durch aus der pyrotechnischen Reaktion resultierende, hohen Temperaturen irreversibel trennbar ist.

13. Steckverbindung (S) nach Anspruch 9,
**dadurch gekennzeichnet, dass** die Verbindungsschiene (7) ein Verbindungselement (10), welches an der Kontaktseite gegenüberliegenden Seite des pyrotechnischen Trennelementes (6) angeordnet ist, aufweist.

14. Steckverbindung (S) nach Anspruch 13,
**dadurch gekennzeichnet, dass** das Verbindungselement (10) im geschlossenen Zustand eine kraftschlüssige oder formschlüssige Verbindung aufweist.

## Claims

1. Plug-in connection (S) for closing a current circuit, comprising a socket element (2) with a number of contact openings (5.1 to 5.n), and a plug element (1) corresponding to the socket element (2) with a number of contact pins (4.1 to 4.n) corresponding to the contact openings (5.1 to 5.n), wherein a pyrotechnic separation element (6), by means of which the current circuit can be opened, is integrated in the socket element (2) or in the plug element (1),
**characterised in that** the contact openings (5.1 to 5.n) are each connected to one another and/or the contact pins (4.1 to 4.n) are each connected to one another via a connecting rail (7) in the socket element (2) or in the plug element (1), which socket rail is disconnectable through a pyrotechnic reaction of the pyrotechnic separation element (6).

2. Plug-in connection (S) according to claim 1,
**characterised in that** at least one of the contact openings (5.1 to 5.n) is designed as an input contact opening (5.4 to 5.n) and at least one of the contact openings (5.1 to 5.n) is designed as an output contact opening (5.1 to 5.3) and/or at least one of the contact pins (4.1 to 4.n) is designed as an input contact pin (4.4 to 4.n) corresponding to the input contact opening (5.4 to 5.n) and at least one of the contact pins (4.1 to 4.n) is designed as an output contact pin (4.1 to 4.3) corresponding to the output contact opening (5.1 to 5.3).

3. Plug-in connection (S) according to one of claims 1 or 2, **characterised in that** the socket element (2) or the plug element (1) is connected to at least one control device (SG1 to SG3) via electrical wires (3.1 to 3.5).

4. Plug-in connection (S) according to one of claims 1 to 3, **characterised in that** the pyrotechnic separation element (6) is arranged between two contact openings (5.1 to 5.n) or parallel alongside one of the outer contact openings (5.1 to 5.n) or between two contact pins (4.1 to 4.n) or parallel alongside one of the outer contact pins (4.1 to 4.n).

5. Plug-in connection (S) according to one of claims 1 to 4, **characterised in that** the dimensions of the connecting rail (7), in particular the length, shape and/or position of the connecting rail (7), are adapted to the position of the pyrotechnic separation element (6).

6. Plug-in connection (S) according to one of claims 1 to 5, **characterised in that** a latching device is arranged in particular on the contact openings (5.1 to 5.n) of the socket element (2) and/or on the contact pins (4.1 to 4.n) of the plug element (1).

7. Plug-in connection (S) according to one of claims 1 to 6, **characterised in that** a pot-shaped element (9) is arranged between the connecting rail (7) and the side of the pyrotechnic separation element (6) opposite the contact side.

8. Plug-in connection (S) according to one of claims 1 to 7, **characterised in that** the pyrotechnic separation element (6) contains a pyrotechnic charge.

9. Plug-in connection (S) according to one of claims 1 to 8, **characterised in that**, when the pyrotechnic separation element (6) is triggered, the connecting rail (7) can be detached or deformed by a drive pressure resulting from the pyrotechnic reaction.

10. Plug-in connection (S) according to claim 9, **characterised in that**, due to the pressure-induced deformation of the connecting rail (7), the connecting rail (7) can be angled in the direction away from the contact side, as a result of which at least one of the contact openings (5.1 to 5.n) can be detached from the associated contact pin (4.1 to 4.n).

11. Plug-in connection (S) according to claim 9, **characterised in that** the connecting rail (7) is provided with a predetermined breaking point (11) and, when the pyrotechnic separation element (6) is triggered, the connecting rail can be detached at the predetermined breaking point (11) by a drive pressure resulting from the pyrotechnic reaction.

12. Plug-in connection according to one of claims 1 to 8, **characterised in that**, when the pyrotechnic separation element (6) is triggered, the connecting rail (7) can be irreversibly detached by high temperatures resulting from the pyrotechnic reaction.

13. Plug-in connection (S) according to claim 9, **characterised in that** the connecting rail (7) has a connecting element (10) which is arranged on the side of the pyrotechnic separation element (6) opposite the contact side.

14. Plug-in connection (S) according to claim 13, **characterised in that** the connecting element (10) in the closed state comprises a force-fitting or form-fitting connection.

## Revendications

1. Connexion à fiches (S) pour la fermeture d'un circuit électrique qui comprend un élément femelle (2) avec une pluralité d'orifices de contact (5.1 à 5.n) et un élément mâle (1) correspondant à l'élément femelle (2), avec une pluralité de tiges de contact (4.1 à 4.n) qui correspondent aux orifices de contact (5.1 à 5.n), sachant que, dans l'élément femelle (2) ou dans l'élément mâle (1), est intégré un élément séparateur pyrotechnique (6) au moyen duquel le circuit électrique peut être interrompu
**caractérisée en ce que**
les orifices de contact (5.1 à 5.n) et / ou les tiges de contact (4.1 à 4.n) sont respectivement reliés les uns aux autres dans l'élément femelle (2) ou dans l'élément mâle (1), par l'intermédiaire d'une barre de connexion (7) qui peut être séparée par une réaction pyrotechnique de l'élément séparateur pyrotechnique (6).

2. Connexion à fiches (S) selon la revendication 1,
**caractérisée en ce que**
au moins l'un des orifices de contact (5.1 à 5.n) est réalisé en tant qu'orifice de contact d'entrée (5.4 à 5.n) et au moins l'un des orifices de contact (5.1 à 5.n) est réalisé en tant qu'orifice de contact de sortie (5.1 à 5.3) et au moins l'une des tiges de contact (4.1 à 4.n) est réalisée en tant que tige de contact d'entrée (4.4 à 4.n) correspondant avec orifices de contact (5.4 à 5.n) et au moins l'une des tiges de contact (4.1 à 4.n) est réalisée en tant que tige de contact de sortie (4.1 à 4.3) correspondant à l'orifice de contact de sortie (5.1 à 5.3).

3. Connexion à fiches (S) selon revendication 1 ou 2,
**caractérisée en ce que**
l'élément femelle (2) ou l'élément mâle (1) est relié à au moins un appareil de commande (SG1 à SG3) par l'intermédiaire de conduites électriques (3.1 à 3.5).

4. Connexion à fiches (S) selon l'une des revendications 1 à 3,
**caractérisée en ce que**
l'élément séparateur pyrotechnique (6) est disposé entre deux orifices de contact (5.1 à 5.n) ou parallèlement, à côté de l'un des orifices de contact (5.1 à 5.n) extérieurs, ou entre deux tiges de contact (4.1 à 4.n) ou parallèlement, à côté de l'une des tiges de contact (4.1 à 4.n) extérieures.

5. Connexion à fiches (S) selon l'one des revendications 1 à 4,
**caractérisée en ce que**
les dimensions de la barre de connexion (7), en particulier la longueur, la forme et / ou la position de la barre de connexion (7) sont adaptées à la position de l'élément séparateur pyrotechnique (6).

6. Connexion à fiches (S) selon l'une des revendications 1 à 5,
**caractérisée en ce que**
particulièrement sur les orifices de contact (5.1 à 5.n) de l'élément femelle (2) et / ou sur les tiges de contact (4.1 à 4.n) de l'élément mâle (1), est agencé un dispositif de blocage.

7. Connexion à fiches (S) selon l'une des revendications 1 à 6,
**caractérisée en ce que**,
entre la barre de connexion (7) et la face de l'élément séparateur pyrotechnique (6) opposée à la face de contact, est agencé un élément (9) en forme de pot.

8. Connexion à fiches (S) selon l'une des revendications 1 à 7,
**caractérisée en ce que**
l'élément séparateur pyrotechnique (6) contient une charge pyrotechnique.

9. Connexion à fiches (S) selon l'une des revendications 1 à 8,
**caractérisée en ce que**,
lors du déclenchement de l'élément séparateur pyrotechnique (6), la barre de connexion (7) peut être séparée ou déformée par une pression de commande qui résulte de la réaction pyrotechnique.

10. Connexion à fiches (S) selon la revendication 9,
**caractérisée en ce que**,
par la déformation de la barre de connexion (7), due de la pression, la barre de connexion (7) peut être coudée dans la direction opposée à la face de contact, ce en raison de quoi au moins l'un des orifices de contact (5.1 à 5.n) peut être séparé de la tige de contact (4.1 à 4.n) y associée.

11. Connexion à fiches (S) selon la revendication 9,
**caractérisée en ce que**
la barre de connexion (7) est dotée d'un point destiné à la rupture (11) et que, lors du déclenchement de l'élément séparateur pyrotechnique (6), la barre de connexion (7) peut être séparée au point destiné à la rupture (11) par une force de pression de commande résultant de la réaction pyrotechnique.

12. Connexion à fiches (S) selon l'une des revendications 1 à 8,
**caractérisée en ce que**
lors du déclenchement de l'élément séparateur pyrotechnique (6), la barre de connexion (7) peut être séparée irréversiblement en raison des températures élevées résultant de la réaction pyrotechnique

13. Connexion à fiches (S) selon la revendication 9,
**caractérisée en ce que**
la barre de connexion (7) est dotée d'un élément de liaison (10), qui est disposé sur la face de l'élément séparateur pyrotechnique (6) opposée à la face de contact.

14. Connexion à fiches (S) selon la revendication 13,
**caractérisée en ce que**
l'élément de liaison (10) à l'état fermé présente une fermeture par adhérence ou par engagement géométrique.
